# EUROPÄISCHE PATENTSCHRIFT

(11) **EP 3 382 834 B1**
(45) Veröffentlichungstag und Bekanntmachung des Hinweises auf die Patenterteilung: **02.10.2019**
(21) Anmeldenummer: 17305379.4
(22) Anmeldetag: 30.03.2017
(51) Int. Cl.: H02G 3/12, H02G 3/04, H02G 3/08

(54) **HÖHENVERSTELLBARE GERÄTEEINBAUDOSE FÜR KABELKANÄLE**
HEIGHT ADJUSTABLE FLUSH MOUNTED BOX FOR CABLE CONDUITS
PRISE INTÉGRÉE D'APPAREIL RÉGLABLE EN HAUTEUR POUR GOULOTTES DE CÂBLES

(43) Veröffentlichungstag der Anmeldung: 03.10.2018
(73) Patentinhaber: Tehalit GmbH, 67716 Heltersberg (DE)
(72) Erfinder: MATTFELDT, Christian, 66484 Schmitshausen (DE); SZABO, Thomas, 66849 Landstuhl (DE)
(74) Vertreter: Nuss, Laurent

(56) Entgegenhaltungen:
- EP-A1- 2 615 708
- DE-A1- 3 536 623
- DE-U- 7 040 540

## Beschreibung

Die vorliegende Erfindung betrifft eine Geräteeinbaudose für Kabelkanäle.

Es sind bereits Geräteeinbaudosen für Kabelkanäle bekannt, die es ermöglichen in einem Kabelkanal eingerastet zu werden und dort mit den zu montierenden Elektro-Einbaugeräten bestückt zu werden.

Es werden in der Praxis jedoch oft verschiedene Einbauhöhen verwendet, so dass in der Regel mehrere Dosenarten mit verschiedenen Höhen benötigt werden, was umständlich und kostenungünstig ist. Relevanter Stand der Technik ist in DE 35 36 623 A1, EP 2 615 708 A1 und DE 70 40 540 U zu finden.

Der vorliegenden Erfindung liegt daher die Aufgabe zugrunde, eine Geräteeinbaudose vorzuschlagen, die es erlaubt, einfach und ohne zusätzliche Teile zwei verschiedene Einbauhöhen für die Montage in einem Kabelkanal anzubieten.

Produktions- und Lagerkosten werden somit durch ein einziges Modell für mindestens zwei Anwendungshöhen reduziert während gleichzeitig die Montage vereinfacht wird.

Diese Aufgabe wird gelöst durch eine Geräteeinbaudose mit den Merkmalen des Anspruchs 1.

Weitere vorteilhafte Merkmale werden in den Unteransprüchen angegeben.

Somit betrifft die Erfindung eine Geräteeinbaudose für Kabelkanäle umfassend:
- ein oben offenes, quadratförmiges, oberes Gehäuseteil mit einem Boden und vier Seitenwänden, die Mittel zum Befestigen eines Elektro-Einbaugerätes besitzen,
- ein unteres Gehäuseteil das als Sockel in einem Kabelkanal befestigt werden kann und das mit dem Boden des oberen Gehäuseteils zusammenwirkt um die Geräteeinbaudose zu bilden, wobei das obere Gehäuseteil gegenüber dem unteren Gehäuseteil drehend bewegt wird.

So wird es durch ein einfaches Drehen per Hand möglich die Gesamthöhe der Dose an die gewünschte Höhe in dem Kabelkanal anzupassen. Zusätzliche Aufbauten oder Justierungen wie bei den üblichen, bekannten Dosen mit konstanter Höhe entfallen somit.

Die Erfindung wird nun an Hand von Ausführungsbeispielen näher erläutert, die nicht einschränkenden Beispielen darstellen, dies im Zusammenhang mit den anliegenden folgenden schematischen Figuren.

Es zeigen:
Fig. 1a, b jeweils eine perspektivische Ansicht einer Ausführungsform der erfindungsgemäßen Geräteeinbaudose (ohne Elektro-Einbaugerät) vor der Montage, von zwei verschiedenen Blickwinkeln aus gesehen;
Fig. 2a, b jeweils eine vergrößerte Ansicht der beiden Gehäuseteile der Figuren 1a und 1b in deren Verbindungsbereich; und
Fig. 3a, b jeweils eine Seitenansicht der erfindungsgemäßen Geräteeinbaudose (ohne Elektro-Einbaugerät) in einem Kabelkanal montiert, mit den zwei verschiedenen eingestellten Höhen.

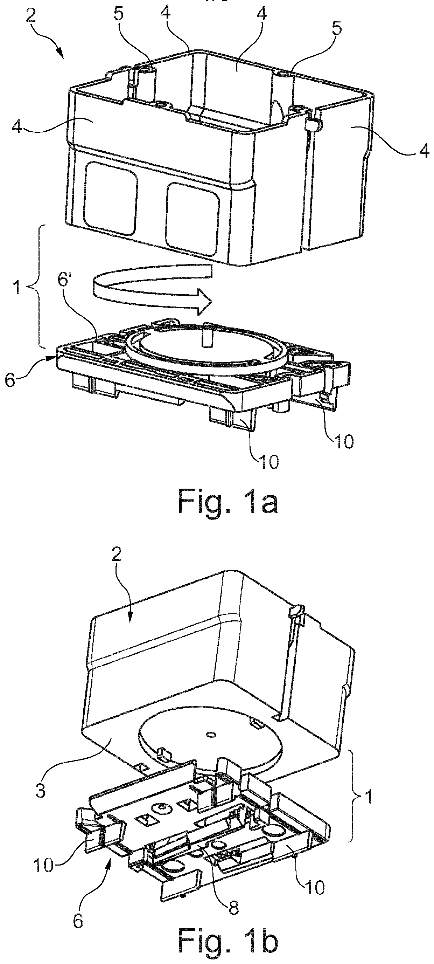

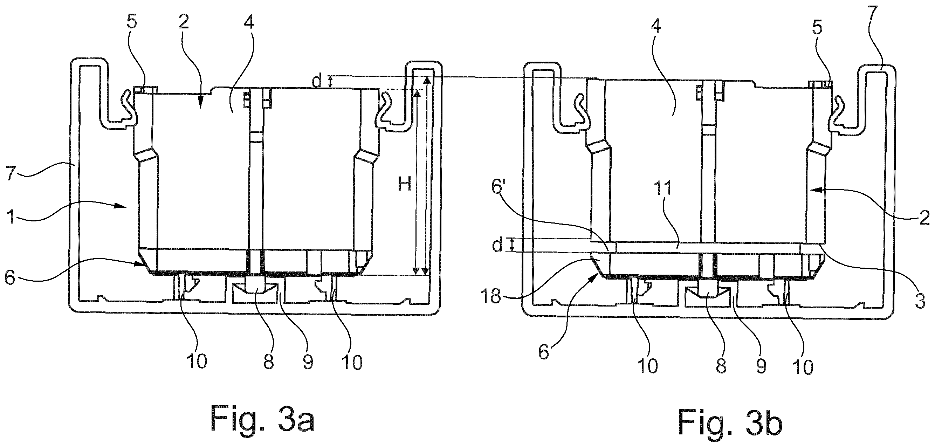

Wie in den Figuren 1a und 1b vereinfacht illustriert, betrifft die vorliegende Erfindung eine Geräteeinbaudose 1 für Kabelkanäle 7 (sichtbar auf Figur 3a oder 3b), im Wesentlichen umfassend:
- ein oben offenes, etwa kaderförmiges, oberes Gehäuseteil 2 mit einem Boden 3 und vier Seitenwänden 4, die Mittel 5 zum Befestigen eines Elektro-Einbaugerätes besitzen,
- ein unteres Gehäuseteil 6 das als Sockel in einem Kabelkanal 7 befestigt werden kann und das mit dem Boden 3 des oberen Gehäuseteils 2 zusammenwirkt um die Geräteeinbaudose 1 zu bilden, wobei das obere Gehäuseteil 2 gegenüber dem unteren Gehäuseteil 6 drehend bewegt werden kann und dadurch die Gesamthöhe H der Geräteeinbaudose 1 verändert wird. Dies wird noch auf den Figuren 3a und 3b deutlicher.

Die zu montierenden Elektro-Einbaugeräte (Steckdosen, Kabelverteiler...) sowie andere sekundäre Teile (Kabelanschlüsse, elektrische Versorgungen, usw.) wurden der Einfachheit wegen weggelassen.

In der Regel werden symmetrische Dosen bzw. Ausfertigungen stark bevorzugt. Wie im dargestellten Beispiel, kann die erfindungsgemäße Geräteeinbaudose 1 ein eher quadratförmiges Gesamtgehäuse (hier z. B. mit abgerundeten Ecken) aufweisen, das aus einem oberen Gehäuseteil 2 und einem unteren Gehäuseteil 6 besteht die beide zusammen montiert werden und frei beweglich zueinander sind, dank einer klassischen zentralen Drehachse.

Alle vier Seitenwände 4 haben vorzugsweise, mehr oder weniger die gleiche Höhe oder zumindest sind sie so gestaltet, dass die notwendigen Mittel 5 in der gleichen Ebene auf der gleichen Höhe liegen, so dass sich das Elektrogerät, insbesondere durch einen in der Regel quadratischen Rahmen, z. B. aus Metall, auf das Gehäuse fixieren läßt. Dazu kann z. B. der Rahmen auf das Gehäuse geschraubt werden.

Erfindungsgemäß beträgt die Drehung zwischen beiden Gehäuseteilen maximal 90°. So sind zwei solide Varianten mit zwei genug unterschiedlichen Gesamthöhen H möglich.

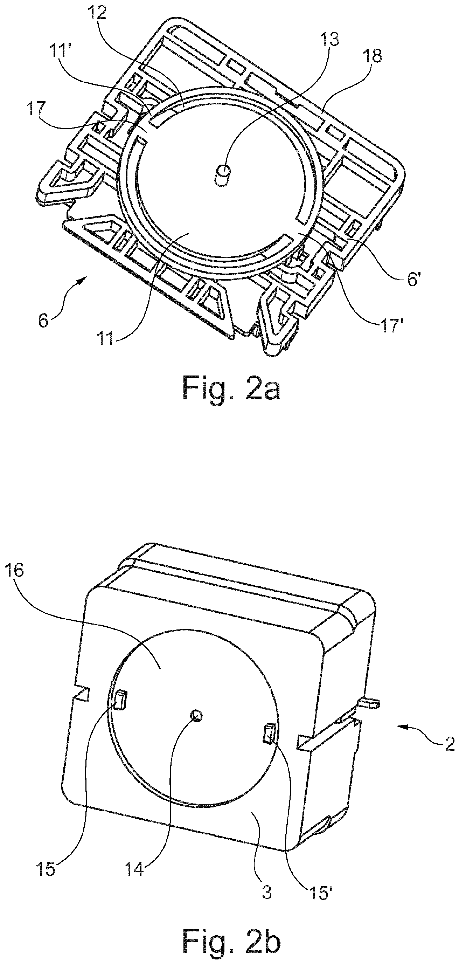

Vorzugsweise ist die Gesamthöhe H bei der maximalen Drehung von 90° maximal. Wie auf Figur 2a zu erkennen, ist die Gesamthöhe H zumindest abschnittsweise kontinuierlich mit dem Drehungswinkel veränderbar.

In einer anderen (nicht dargestellten) Variante ist das obere Gehäuseteil 2 als runder oder im Wesentlichen runder Zylinderbecher ausgestaltet, der sich um eine zentrale Achse drehen lässt. Durch die Drehung wird ebenfalls die Höhe H der gesamten Geräteeinbaudose 1 geändert und es wird, Dank der Symmetrie, eine viel größere Palette an Hohen angeboten als für eine quadratisches oder rechteckiges Modell das immer nach einer der zwei Achsen ausgerichtet werden muss.

Die erfindungsgemäße Geräteeinbaudose 1 ist dann also dadurch gekennzeichnet, dass das obere Gehäuseteil 2 nur eine äußere Seitenwand 4 aufweist und die Form eines Zylinders mit, einem runden oder im Wesentlichen runden Durchmesser oder Querschnitt aufweist.

Vorteilhafterweise ist sie auch dadurch gekennzeichnet, dass die o. g. Mittel 5 als mindestens ein Paar Gewindelöcher ausgebildet sind, die am oberen Rand der äußeren Seitenwand 4 diametral gegenübereinander platziert sind. Bei einem Quadrat (und symmetrisch angebrachten Gewindelöcher) genügt eine Rotation um 90° damit die Becherform mit der Form der Basis oder Grundplatte wieder übereinstimmt.

Bei einem Rechteck ist dazu eine Rotation um mindestens 180° notwendig.

Bei einem runden zylinderförmigen Becher kann der Rotationswinkel und somit die Gesamthöhe H beliebig eingestellt werden.

Die runde Seitenwand 4 des oberen Gehäuseteils 2 verleiht der Geräteeinbaudose 1 einen runden oder im Wesentlichen runden Durchmesser oder Querschnitt. Der kreisförmige Querschnitt garantiert eine freie, unbehinderte Drehung um die als Zentralachse fungierende Nase 13 im Loch 14. Eventuelle, nicht dargestellte Einbuchtungen an der runden Seitenwand 4 oder andere konstruktive Varianten (z. B. gerade Abschnitte im Umfang) ermöglichen zusätzliche Bauoptionen am oberen Gehäuseteil 2 welche jedoch dessen freie Drehbewegung nicht beeinträchtigen.

Die Mittel 5 zur Befestigung der Elektrogeräte können dann z. B. als Gewindelöcher ausgebildet sein, die am Umfang am oberen Rand der Seitenwand 4 angebracht werden, insbesondere diametral gegenübereinander, als eine oder mehrere Paare.

Bei einem Paar Gewindelöcher muss das obere Gehäuseteil 2 um 180° gedreht werden. Es entstehen somit mindestens zwei verschiedene Höhenmöglichkeiten für die besagte Gesamthöhe H.

Bei zwei (im Kreuz) angebrachten Paaren Gewindelöcher reicht eine Drehung um 90° und es werden entsprechend mindestens vier verschiedene Höhen bei einer kompletten Drehung generiert.

Dank der schraubenartigen Rampe im Boden 3 des Bechers und auf dem unteren Gehäuseteil 6 können beide Gehäuseteile so verdreht werden, dass die Gesamthöhe H entsprechend zu- oder abnimmt.

Wie auf den Figuren 1a, 1b, 3a und 3b zu erkennen, ist die erfindungsgemäße Geräteeinbaudose 1 auch dadurch gekennzeichnet, dass das untere Gehäuseteil 6 mindestens ein Rastmittel 8 aufweist, das mit mindestens einem, im Boden des Kabelkanals 7 angebrachten komplementärem Rasthaken 9 zu einer Rastverbindung kooperiert.

In einer verbesserten Variante ist die erfindungsgemäße Geräteeinbaudose 1 ebenfalls dadurch gekennzeichnet, dass das untere Gehäuseteil 6 mindestens ein paar Füße 10 aufweist, die sich auf den Boden des Kabelkanals 7 zur Stabilisierung der Geräteeinbaudose 1 abstützen. Diese Elemente, Stege oder ähnliche Mittel sind wie dargestellt symmetrisch links und rechts am Boden des unteren Gehäuseteils 6 verteilt während die Rastmittel 8 zum Einrasten der Dosen auf dem Kabelkanal 7 in der Regel eher mittig auf einer Art zentralen Schiene oder auf parallel verlaufenden Schienenprofile stattfindet. Diese erste Möglichkeit wurde ebenfalls auf den Figuren 3a und 3b angedeutet.

In einer bevorzugten Ausführungsform ist die erfindungsgemäße Geräteeinbaudose 1 noch dadurch gekennzeichnet, dass die jeweiligen Mittel 5 der einzelnen Seitenwand oder der vier Seitenwände 4 zum Befestigen eines Elektro-Einbaugerätes als Gewindelöcher ausgebildet sind, die zumindest paarweise zur waagrechten und/oder senkrechten Befestigung durch Anschrauben des Elektro-Einbaugeräts kooperieren.

Ferner ist die Geräteeinbaudose 1 noch dadurch gekennzeichnet, dass die Öffnungen zumindest zwei gegenüberliegenden, vorzugsweise alle Öffnungen der Gewindelöcher auf einer gleichen Höhe bzw. in einer gleichen Ebene der Seitenwänden 4 ausgebildet sind.

Diese jeweiligen Mittel 5 der vier Seitenwände 4 zum Befestigen eines Elektro-Einbaugerätes können z. B. als Gewindelöcher ausgebildet werden und sind zumindest paarweise zur Befestigung durch Anschrauben des Elektro-Einbaugeräts vorgesehen (siehe Fig. 1a).

Die Dicke der Seitenwände 4 ist zumindest an den Stellen wo die Mittel 5 vorhanden sind entsprechend stark, wie auf den entsprechenden Figuren deutlich zu erkennen.

Die anderen Bereiche dieser Wände können dünner ausgeführt werden um Material zu sparen.

Zweckmäßigerweise ist die erfindungsgemäße Geräteeinbaudose ebenfalls, dadurch gekennzeichnet, dass die Öffnungen zumindest zwei gegenüberliegenden, vorzugsweise alle Öffnungen der Gewindelöcher auf einer gleichen Höhe bzw. in einer gleichen Ebene der einzigen (runden) Seitenwand oder einzelnen Seitenwänden 4 ausgebildet sind.

Auf der Figur 1a wurde die Höhe einer der vier Seitenwänden 4 etwas niedriger als die Höhe der anderen Seitenwänden 4 gewählt. Die Öffnungen der angedeuteten Gewindelöcher liegen dennoch in der gleichen Ebene. Es wird somit gewährleistet, dass das Elektro-Einbaugerät sicher und ordnungsgemäß montiert werden kann und, dass z. B. im Falle eines Metallrahmens der auf das Gehäuse 1 fixiert wird dieser vorzugsweise parallel zum Boden des Kabelkanals ausgerichtet ist.

In einer bevorzugten Form, und wie auf den Figuren 2a und 2b besonders gut zu erkennen, ist die erfindungsgemäße Geräteeinbaudose 1 ebenfalls dadurch gekennzeichnet, dass der Boden 3 des oberen Gehäuseteils 2 eine runde, scheibenförmige Ausnehmung 16 aufweist die, mit einem runden scheibenförmigen, zylindrischen Basisteil 11 die relative Drehung der beiden Gehäuseteile 2, 6 ermöglicht, insbesondere um eine zentrale Achse, die durch eine zylinderförmige Nase 13 in einem kreisförmigen Loch 14 materialisiert wird.

Der besagte Boden 3 ist im Wesentlichen eben und besitzt u. a. abgerundete Ecken. In seinem zentralen Bereich wurde, bis auf zwei Vorsprünge 15, 15' eine zylindrische, scheiben- und kreisförmige Ausnehmung 16 sowie ein Loch 14 zur Aufnahme einer Drehachse gebohrt. Diese Ausnehmung 16 ist für das entsprechende zylindrische, scheiben- und kreisförmige Basisteil 11 und dessen Nase 13 auf dem untere Gehäuseteil 6 bestimmt. Die Nase 13 dient somit als Drehachse im Loch 14 wenn beide Teile zusammen gefügt werden.

Die besagt runde, scheibenförmige Ausnehmung 16 des Bodens 3 weist mindestens zwei diametral gegenüber angebrachte Vorsprünge 15, 15' auf, die in Richtung des unteren Geräteteils 6 hervorstehen und in einer ringförmigen Rille 12 in dem runden scheibenförmigen, zylindrischen Basisteil 11 eingreifen um den Abstand d zwischen den beiden Gehäuseteilen 2, 6 zu variieren, indem der Boden dieser Rille 12 mit einer variablen Tiefe ausgestaltet ist. Somit wird die Gesamthöhe H der fertigen Geräteeinbaudose 1 um diesen Abstand d geändert indem das obere und untere Teil gegeneinander verdreht werden und die Vorsprünge 15, 15' von einer Position tief in der Rille 12 zu einer anderen Position auf der Oberflache 11' verschoben werden und somit das obere Gehäuseteil 2 gegenüber dem unteren Gehäuseteil 6 hoch emporheben.

Das untere Gehäuseteil 6 besteht wiederum aus einer Basisplatte 18, die das obere Gehäuseteil 2 am unteren Ende ergänzt und es ermöglicht die gesamte Geräteeinbaudose 1 im Kabelkanal 7 zu montieren. Diese Basisplatte 18 hat eine allgemeine Höhe oder Dicke, mit einer Oberfläche 6' als Grenze (s. Fig. 3b), z. B. zur Bestimmung des Abstands d zu der Oberfläche am Boden 3 des oberen Gehäuseteils 2.

In der Praxis kann die Höhe H z. B. zwischen 50 und 55 mm variieren, also ist dann d=5 mm.

Auf dieser Basisplatte 18 ragt nun das runde scheibenförmige, zylindrische Basisteil 11 hervor in dem die oben beschriebene Rille 12 geformt, z. B. eingefräst wurde. Im Prinzip sind alle Teile der Geräteeinbaudose aus Kunststoff gemacht bzw. geformt und lassen sich somit einfach formen und/oder bearbeiten.

Beim Aufsetzen des oberen Gehäuseteils 2 auf den unteren Gehäuseteil 6 ragt die Nase 13 durch das Loch 14 und die Vorsprüngen 15, 15' stützen sich auf der Oberfläche 11' des Basisteil 11 ab. Dies geschieht entweder entlang den flachen Abschnitten 17, 17' und in diesem Fall addieren sich die einzelnen Höhen der beiden oberen und unteren Gehäuseteile 2, 6 (s. Figur 3b) oder die Vorsprünge 15, 15' landen in den beiden Kanälen der besagte Rille 12 wo die Tiefe dazu führt, dass beide Gehäuseteile 2, 6 in sich einfahren und sich somit die einzelnen besagten Höhen in dieser Konfiguration verkanten, was dazu führt das die Gesamthöhe H der Geräteeinbaudose 1 kleiner wird (s. Figur 3a).

Die besagte Rille 12 ist aus zwei kreisförmigen Kanälen mit variabler Tiefe ausgebildet (s. Figur 2a) die durch zwei Abschnitte 17, 17' im Kreis unterbrochen werden. Die Vorsprünge 15, 15' des oberen Gehäuseteils 2, die in der Rille 12 entlang gleiten haben eine entsprechend passende kreisabschnittförmige Geometrie.

Die Geräteeinbaudose 1 nach der vorliegenden Erfindung ist also dadurch gekennzeichnet, dass die ringförmige Rille 12 in dem runden scheibenförmigen, zylindrischen Basisteil 11 zwei diametral gegenüber liegende flache Ringabschnitte 17, 17' aufweist in denen die Tiefe der Rille 12 gleich Null gegenüber der restlichen ebenen Oberfläche 11' des scheibenförmigen, zylindrischen Basisteil 11 ist.

Vorzugsweise ist die Geräteeinbaudose 1 nach der vorliegenden Erfindung ferner dadurch gekennzeichnet, dass die Höhe des runden scheibenförmigen, zylindrischen Basisteil 11 der Höhe der runden scheibenförmigen Ausnehmung 16 entspricht und das obere Gehäuseteil 2 mit seinem Boden 3 auf der Oberfläche 6' (der Basisplatte 18) des unteren Gehäuseteils 6 aufliegt wenn der Abstand d zwischen beiden drehbaren Gehäuseteilen 2, 6 minimal ist. Dies ist auf Figur 3a gut zu sehen.

Die Geräteeinbaudose 1 der vorliegenden Erfindung ist auch dadurch gekennzeichnet, dass die zylinderförmige Nase 13 im unteren Geräteteil 6 angebracht ist und mit dem entsprechenden kreisförmigen Loch 14 im Boden 3 des oberen Gehäuseteils 2 als gemeinsame Drehachse fungiert und zusammenwirkt, wobei die Nase 13 lang genug ist um das obere Gehäuseteil 2 mit dem unteren Gehäuseteil 6 stets zusammen und in Verbindung zu halten, insbesondere wenn der Abstand d maximal ist.

Die erfindungsgemäße Geräteeinbaudose 1 bringt insbesondere folgende Vorteile mit sich:
- eine Montage durch Einrasten in den Kabelkanal 7 wie bei herkömmlichen Dosen;
- eine leichte Einstellung der gewünschten Gesamthöhe H durch einfaches Drehen per Hand;
- ein einziges Modell ermöglicht es verschiedene Höhen anzubieten, was das gesamte Sortiment entsprechend reduziert.

Selbstverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens der Ansprüche bleiben, jederzeit möglich.

## Patentansprüche

1. Geräteeinbaudose (1) für Kabelkanäle (7) umfassend:
- ein oben offenes, becherförmiges, oberes Gehäuseteil (2) mit einem Boden (3) und mindestens eine, vorzugsweise vier Seitenwänden (4), die Mittel (5) zum Befestigen eines Elektro-Einbaugerätes besitzen,
- ein unteres Gehäuseteil (6), das als Sockel in einem Kabelkanal (7) befestigt wird und das mit dem Boden (3) des oberen Gehäuseteils (2) zusammenwirkt um die Geräteeinbaudose (1) zu bilden, wobei das obere Gehäuseteil (2) gegenüber dem unteren Gehäuseteil (6) drehend bewegt wird, **dadurch gekennzeichnet dass**, dadurch die Gesamthöhe (H) der Geräteeinbaudose (1) verändert wird,
der Boden (3) des oberen Gehäuseteils (2) eine runde, scheibenförmige Ausnehmung (16) aufweist die, mit einem runden scheibenförmigen, zylindrischen Basisteil (11) die relative Drehung der beiden Gehäuseteile (2, 6) ermöglicht, insbesondere um eine zentrale Achse, die durch eine zylinderförmige Nase (13) in einem kreisförmigen Loch (14) materialisiert wird, und wobei
die runde, scheibenförmige Ausnehmung (16) des Bodens (3) mindestens zwei diametral gegenüber angebrachte Vorsprünge (15, 15') aufweist, die in Richtung des unteren Geräteteils (6) hervorstehen und in einer ringförmigen Rille (12) in dem runden scheibenförmigen, zylindrischen Basisteil (11) eingreifen um den Abstand (d) zwischen den beiden Gehäuseteilen (2, 6) zu variieren, indem der Boden dieser Rille (12) mit einer variablen Tiefe ausgestaltet ist.

2. Geräteeinbaudose (1) nach Anspruch 1, **dadurch gekennzeichnet, dass** bei einem rechteckigen oder quadratischen oberen Gehäuseteil (2) mit vier Seitenwänden (4), die Drehung maximal 90° beträgt.

3. Geräteeinbaudose (1) nach Anspruch 2, **dadurch gekennzeichnet, dass** die Gesamthöhe (H) bei der maximalen Drehung von 90° maximal ist.

4. Geräteeinbaudose (1) nach einem der Ansprüche 1 bis 3, **dadurch gekennzeichnet, dass** sich die Gesamthöhe (H) zumindest abschnittsweise kontinuierlich mit dem Drehungswinkel verändert.

5. Geräteeinbaudose (1) nach einem der Ansprüche 1 bis 4, **dadurch gekennzeichnet, dass** das untere Gehäuseteil (6) mindestens ein Rastmittel (8) aufweist, das mit mindestens einem, im Boden des Kabelkanals (7) angebrachten komplementärem Rasthaken (9) zu einer Rastverbindung kooperiert.

6. Geräteeinbaudose (1) nach Anspruch 5, **dadurch gekennzeichnet, dass** das untere Gehäuseteil (6) mindestens ein paar Füße (10) aufweist, die sich auf den Boden des Kabelkanals (7) zur Stabilisierung der Geräteeinbaudose (1) abstützen.

7. Geräteeinbaudose (1) nach einem der Ansprüche 1 bis 6, **dadurch gekennzeichnet, dass** die jeweiligen Mittel (5) der Seitenwand oder Seitenwände (4) zum Befestigen eines Elektro-Einbaugerätes als Gewindelöcher ausgebildet sind, die paarweise durch Anschrauben des Elektro-Einbaugeräts kooperieren.

8. Geräteeinbaudose (1) nach Anspruch 7, **dadurch gekennzeichnet, dass** die Öffnungen zumindest zwei gegenüberliegenden, vorzugsweise alle Öffnungen der Gewindelöcher auf einer gleichen Höhe bzw. in einer gleichen Ebene der Seitenwand oder Seitenwänden (4) ausgebildet sind.

9. Geräteeinbaudose (1) nach einem der Ansprüche 1 bis 8, **dadurch gekennzeichnet, dass** die ringförmige Rille (12) in dem runden scheibenförmigen, zylindrischen Basisteil (11) zwei diametral gegenüber liegende flache Ringabschnitte (17, 17') aufweist in denen die Tiefe der Rille (12) gleich Null gegenüber der restlichen ebenen Oberfläche (11') des scheibenförmigen, zylindrischen Basisteil (11) ist.

10. Geräteeinbaudose (1) nach einem der Ansprüche 1 bis 9, **dadurch gekennzeichnet, dass** die Höhe des runden scheibenförmigen, zylindrischen Basisteil (11) der Höhe der runden scheibenförmigen Ausnehmung (16) entspricht und das obere Gehäuseteil (2) mit seinem Boden (3) auf der Oberfläche (6') des unteren Gehäuseteils (6) aufliegt wenn der Abstand (d) zwischen beiden drehbaren Gehäuseteilen (2, 6) minimal ist.

11. Geräteeinbaudose (1) nach einem der Ansprüche 1 bis 10, **dadurch gekennzeichnet, dass** die zylinderförmige Nase (13) im unteren Geräteteil (6) angebracht ist und mit dem entsprechenden kreisförmigen Loch (14) im Boden (3) des oberen Gehäuseteils (2) als gemeinsame Drehachse fungiert und zusammenwirkt, wobei die Nase (13) lang genug ist um das obere Gehäuseteil (2) mit dem unteren Gehäuseteil (6) stets zusammen und in Verbindung zu halten.

12. Geräteeinbaudose (1) nach einem der Ansprüche 1 bis 11, **dadurch gekennzeichnet, dass** das obere Gehäuseteil (2) nur eine äußere Seitenwand (4) aufweist und die Form eines Zylinders mit, einem runden oder im Wesentlichen runden Durchmesser oder Querschnitt aufweist.

13. Gerätebechereinbaudose (1) nach Anspruch 12, **dadurch gekennzeichnet, dass** die Mittel (5) als mindestens ein Paar Gewindelöcher ausgebildet sind, die am oberen Rand der äußeren Seitenwand (4) diametral gegenübereinander platziert sind.

## Claims

1. Flush mounted box (1) for conduits (7), comprising:
- an open-top, cup-shaped upper housing part (2) having a bottom (3) and at least one, preferably four, side walls (4), which have means (5) for fixing an electrical installation device,
- a lower housing part (6), which is fixed as a base in a conduit (7) and which interacts with the bottom (3) of the upper housing part (2) in order to form the flush mounted box (1), the upper housing part (2) being moved in rotation with respect to the lower housing part (6), ch
aracterized in that
the overall height (H) of the flush mounted box (1) is changed as a result,
the bottom (3) of the upper housing part (2) has a round, disc-shaped recess (16) which, with a round disc-shaped cylindrical base part (11), permits the relative rotation of the two housing parts (2, 6), in particular about a central axis, which is materialized by a cylindrical lug (13) in a circular hole (14), and wherein
the round disc-like recess (16) of the bottom (3) has at least two projections (15, 15') which are fitted diametrically opposite each other, which project in the direction of the lower device part (6) and engage in an annular groove (12) in the round disc-shaped cylindrical base part (11) in order to vary the distance (d) between the two housing parts (2, 6), in that the bottom of this groove (12) is configured with a variable depth.

2. Flush mounted box (1) according to Claim 1, **characterized in that** in the case of a rectangular or square upper housing part (2) having four side walls (4), the rotation is at most 90°.

3. Flush mounted box (1) according to Claim 2, **characterized in that** the overall height (H) is maximal at the maximum rotation of 90°.

4. Flush mounted box (1) according to one of Claims 1 to 3, **characterized in that** the overall height (H) changes at least partly continuously with the angle of rotation.

5. Flush mounted box (1) according to one of Claims 1 to 4, **characterized in that** the lower housing part (6) has at least one latching means (8), which cooperates with at least one complementary latching hook (9) fitted in the bottom of the conduit (7) to form a latching connection.

6. Flush mounted box (1) according to Claim 5, **characterized in that** the lower housing part (6) has at least one pair of feet (10), which are supported on the bottom of the conduit (7) to stabilise the flush mounted box (1).

7. Flush mounted box (1) according to one of Claims 1 to 6, **characterized in that** the respective means (5) of the side wall or side walls (4) are designed for the fixing of an electrical installation device as threaded holes, which cooperate in pairs by screwing in the electrical installation device.

8. Flush mounted box (1) according to Claim 7, **characterized in that** the openings of at least two opposite openings, preferably all the openings of the threaded holes, are formed at the same height or in the same plane of the side wall or side walls (4).

9. Flush mounted box (1) according to one of Claims 1 to 8, **characterized in that** the annular groove (12) in the round disc-shaped cylindrical base part (11) has two diametrically opposite flat annular sections (17, 17') in which the depth of the groove (12) is equal to zero with respect the remaining flat surface (11') of the disc-shaped cylindrical base part (11).

10. Flush mounted box (1) according to one of Claims 1 to 9, **characterized in that** the height of the round disc-shaped cylindrical base part (11) corresponds to the height of the round disc-shaped recess (16), and the upper housing part (2) rests with its bottom (3) on the surface (6') of the lower housing part (6) when the distance (d) between the two rotatable housing parts (2, 6) is minimal.

11. Flush mounted box (1) according to one of Claims 1 to 10, **characterized in that** the cylindrical lug (13) is fitted in the lower device part (6) and functions as a common axis of rotation and cooperates with the corresponding circular hole (14) in the bottom (3) of the upper housing part (2), wherein the lug (13) is long enough in order to keep the upper housing part (2) always together and connected to the lower housing part (6).

12. Flush mounted box (1) according to one of Claims 1 to 11, **characterized in that** the upper housing part (2) has only one outer side wall (4) and has the shape of a cylinder with a round or substantially round diameter or cross section.

13. Flush mounted box (1) according to Claim 12, **characterized in that** the means (5) are formed as at least one pair of threaded holes, which are placed diametrically opposite each other at the upper edge of the outer side wall (4).

## Revendications

1. Boîte de montage d'appareil (1) pour conduits de câbles (7) comprenant :
- une partie supérieure de boîtier (2) en forme de gobelet, ouverte en haut, comportant un fond (3) et au moins une, de préférence quatre parois latérales (4) qui possèdent des moyens (5) pour fixer un appareil électrique encastrable,
- une partie inférieure de boîtier (6) qui est fixée en tant que socle dans un conduit de câbles (7) et qui coopère avec le fond (3) de la partie supérieure de boîtier (2) pour former la boîte de montage d'appareil (1), la partie supérieure de boîtier (2) étant mobile en rotation par rapport à la partie inférieure de boîtier (6),
**caractérisée en ce que**
la hauteur totale (H) de la boîte de montage d'appareil (1) peut ainsi être modifiée,
le fond (3) de la partie supérieure de boîtier (2) présente un évidement rond en forme de disque (16) qui, avec une partie de base cylindrique ronde en forme de disque (11), permet la rotation relative des deux parties de boîtier (2, 6), en particulier autour d'un axe central qui est matérialisé par un tenon cylindrique (13) dans un trou circulaire (14), et
l'évidement rond en forme de disque (16) du fond (3) présente au moins deux saillies (15, 15') diamétralement opposées, qui font saillie dans la direction de la partie inférieure d'appareil (6) et s'engagent dans une rainure annulaire (12) dans la partie de base cylindrique ronde en forme de disque (11) pour faire varier la distance (d) entre les deux parties de boîtier (2, 6), le fond de cette rainure (12) étant réalisé avec une profondeur variable.

2. Boîte de montage d'appareil (1) selon la revendication 1, **caractérisée en ce que**, dans le cas d'une partie supérieure de boîtier (2) rectangulaire ou carrée avec quatre parois latérales (4), la rotation est au maximum de 90°.

3. Boîte de montage d'appareil (1) selon la revendication 2, **caractérisée en ce que** la hauteur totale (H) est maximale à la rotation maximale de 90°.

4. Boîte de montage d'appareil (1) selon l'une des revendications 1 à 3, **caractérisée en ce que** la hauteur totale (H) change continuellement, au moins par sections, avec l'angle de rotation.

5. Boîte de montage d'appareil (1) selon l'une des revendications 1 à 4, **caractérisée en ce que** la partie inférieure de boîtier (6) présente au moins un moyen d'encliquetage (8) qui coopère avec au moins un crochet d'encliquetage complémentaire (9) disposé dans le fond du conduit de câbles (7) pour créer une liaison par encliquetage.

6. Boîte de montage d'appareil (1) selon la revendication 5, **caractérisée en ce que** la partie inférieure de boîtier (6) présente au moins une paire de pieds (10) qui s'appuient sur le fond du conduit de câbles (7) pour stabiliser la boîte de montage d'appareil (1).

7. Boîte de montage d'appareil (1) selon l'une des revendications 1 à 6, **caractérisée en ce que** les moyens respectifs (5) de la paroi latérale ou des parois latérales (4) servant à fixer un appareil électrique encastrable sont réalisés sous la forme de trous filetés qui coopèrent par paires par vissage de l'appareil électrique encastrable.

8. Boîte de montage d'appareil (1) selon la revendication 7, **caractérisée en ce que** les ouvertures, au moins deux ouvertures opposées, de préférence toutes les ouvertures des trous filetés sont réalisées à une même hauteur ou dans un même plan de la paroi latérale ou des parois latérales (4).

9. Boîte de montage d'appareil (1) selon l'une des revendications 1 à 8, **caractérisée en ce que** la rainure annulaire (12) dans la partie de base cylindrique ronde en forme de disque (11) présente deux sections annulaires plates diamétralement opposées (17, 17') dans lesquelles la profondeur de la rainure (12) est égale à zéro par rapport à la surface plane restante (11') de la partie de base cylindrique en forme de disque (11).

10. Boîte de montage d'appareil (1) selon l'une des revendications 1 à 9, **caractérisée en ce que** la hauteur de la partie de base cylindrique ronde en forme de disque (11) correspond à la hauteur de l'évidement rond en forme de disque (16) et la partie supérieure de boîtier (2) repose par son fond (3) sur la surface (6') de la partie inférieure de boîtier (6) lorsque la distance (d) entre les deux parties de boîtier tournantes (2, 6) est minimale.

11. Boîte de montage d'appareil (1) selon l'une des revendications 1 à 10, **caractérisée en ce que** le tenon cylindrique (13) est disposé dans la partie inférieure d'appareil (6) et fonctionne et coopère en tant qu'axe de rotation commun avec le trou circulaire correspondant (14) dans le fond (3) de la partie supérieure de boîtier (2), le tenon (13) étant suffisamment long pour toujours maintenir ensemble et en liaison la partie supérieure de boîtier (2) et la partie inférieure de boîtier (6).

12. Boîte de montage d'appareil (1) selon l'une des revendications 1 à 11, **caractérisée en ce que** la partie supérieure de boîtier (2) présente seulement une paroi latérale extérieure (4) et présente la forme d'un cylindre ayant un diamètre ou une section transversale rond(e) ou sensiblement rond(e).

13. Boîte de montage d'appareil (1) selon la revendication 12, **caractérisée en ce que** les moyens (5) sont réalisés sous la forme d'au moins une paire de trous filetés qui sont placés diamétralement opposés l'un à l'autre sur le bord supérieur de la paroi latérale extérieure (4).
